# FASCICULE DE BREVET EUROPEEN

(11) **EP 1 248 030 B1**
(45) Date de publication et mention de la délivrance du brevet: **25.05.2005**
(21) Numéro de dépôt: 02290567.3
(22) Date de dépôt: 07.03.2002
(51) Int. Cl.: F16L 55/10

(54) **Tuyau flexible intégrant une fonction de vanne et son procédé de fabrication**
Schlauch als Ventil und sein Herstellungsverfahren
Flexible pipe used as a valve and its method of manufacturing

(30) Priorité: 03.04.2001 FR 0104500
(43) Date de publication de la demande: 09.10.2002
(73) Titulaire: Trelleborg Industrie, 63000 Clermont-Ferrand (FR)
(72) Inventeur: Mayau, David, 63450 Tallende (FR); Goubely, Jean-Yves, 63190 Lezoux (FR); Fevre, Pierre, 63450 Saint-Amant-Tallende (FR)
(74) Mandataire: Abello, Michel

(56) Documents cités:
- FR-A- 1 513 484
- FR-A- 2 575 538
- GB-A- 2 241 986

## Description

L'invention concerne un tuyau flexible destiné à transporter un fluide et son procédé de fabrication. L'invention concerne plus particulièrement un tuyau flexible en élastomère, éventuellement renforcé, équipé de raccords à ses extrémités, apte à interrompre la circulation du fluide sous pression le traversant, et le procédé d'obtention d'un tel tuyau flexible.

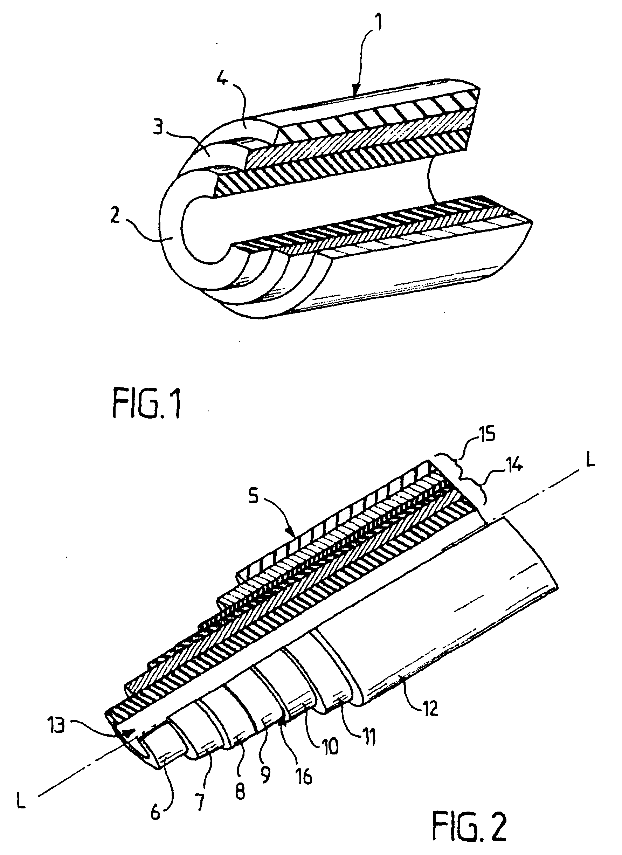

Les tuyaux flexibles destinés à transporter un fluide sous pression comprennent généralement un tube interne, un revêtement externe et une armature de renfort intercalée entre le tube interne et le revêtement externe, tel que représenté à la figure 1. La fonction principale du tube interne 2 du tuyau flexible 1 est d'assurer l'étanchéité et il doit être compatible avec le fluide véhiculé. A titre d'exemple, il doit présenter une résistance chimique pour le transport d'acide, une résistance à l'abrasion pour le transport pneumatique de matériau pulvérulent abrasif ou le transport hydraulique de produit abrasif associé à un liquide, tel que du béton, ou être non-contaminant pour le transport de produits alimentaires. L'utilisation d'élastomère pour le tube interne permet de satisfaire à un grand nombre d'applications et favorise la flexibilité du tuyau. La fonction principale de l'armature de renfort 3 est d'assurer la résistance à la pression interne, et elle doit bien entendu être définie et dimensionnée en fonction de la pression interne et des conditions de service. L'utilisation de câbles, textiles ou métalliques, enrobés d'élastomère, et posés selon deux hélices symétriques, pour constituer l'armature de renfort, permet de balayer une très large gamme de pressions d'utilisation et favorise la flexibilité du tuyau. La fonction principale du revêtement externe 4 est d'assurer la protection de l'armature de renfort contre les agressions de l'environnement dans lequel le tuyau flexible est amené à fonctionner. L'utilisation d'élastomère pour le revêtement externe offre une solution pertinente à une partie importante des exigences environnementales et favorise la flexibilité du tuyau.

De tels tuyaux, dont le diamètre intérieur peut varier de 10 mm à plus 1 200 mm peuvent être avantageusement fabriqués sur des mandrins en acier. Selon les diamètres, le type de matériau employé et le choix du type d'armature de renfort, ce mandrin passera soit sur des tours de confection, auquel cas les différents constituants du tuyau sont rubanés et superposés en spires, soit sur des lignes d'extrusion combinées avec des machines de tressage ou de guipage équipées de tête de rubanage. Pour les tuyaux construits avec des élastomères, la fabrication sur mandrin acier se termine généralement par le rubanage d'une sangle en nylon sur le corps du tuyau et la cuisson de l'ensemble dans une étuve. La cuisson, appelée vulcanisation, est indispensable pour donner aux élastomères leurs propriétés mécaniques. Le retrait dimensionnel de la sangle, lors de l'élévation de température, apporte la compression nécessaire à un bon moulage permettant d'obtenir l'adhésion des différents constituants entre eux, à condition qu'ils aient été judicieusement choisis compatibles.

Pour être reliés entre eux ou à d'autres équipements, tels que des tuyauteries rigides, pompes ou réservoirs par exemple, les tuyaux flexibles sont équipés à chacune de leurs extrémités de raccords constitués généralement d'une tubulure comprenant à une extrémité une bride, un filetage ou un système de verrou baïonnette par exemple. La tubulure est emmanchée légèrement en force dans le tuyau et assemblée sur celui-ci en créant un effort de serrage du corps du tuyau sur la tubulure. Les moyens utilisés pour exercer cette force de serrage vont de la jupe sertie au ligaturage, en passant par les modèles de colliers les plus variés. Les tuyaux flexibles sont fabriqués en longueur plus grande que la longueur d'utilisation finale, et peuvent être coupés et raccordés à la demande pour former une ligne de transport de fluide.

Pour interrompre la circulation du fluide véhiculé lors de l'utilisation d'une telle ligne, il est le plus souvent fait appel à tous les systèmes connus de vannes et autres robinets, qui doivent être intercalés entre des tuyaux flexibles ou entre un tuyau flexible et d'autres équipements. Une autre solution peut consister à écraser le tuyau flexible entre les mâchoires d'une pince, ce principe est connu du document GB 2 241 986. Ces différents systèmes nécessitent l'adjonction de pièces le long de la ligne, ce qui complique le montage de la ligne et ne permet pas de conserver la flexibilité tout le long de la ligne, ce qui peut être préjudiciable dans certaines applications.

Il est connu également un système de vanne qui consiste à emprisonner un tuyau flexible dans un tube rigide de diamètre supérieur au diamètre extérieur du tuyau flexible, en créant une liaison étanche entre le tube rigide et le tuyau flexible à chacune de leurs extrémités, et à obtenir l'écrasement du tuyau flexible en injectant entre le tube rigide et le tuyau flexible un fluide sous pression, cette méthode est analogue à celle de l'obturateur décrit dans le document FR 1 513 484. Pour obtenir l'arrêt de la circulation du fluide dans le tuyau souple, la pression d'injection doit être supérieure à la somme de la pression du fluide en circulation plus la pression nécessaire à écraser totalement le tuyau flexible vide. Toutefois, la présence du tube rigide ne permet pas de conserver la flexibilité tout le long de la ligne, ce qui peut être préjudiciable dans certaines applications. Par ailleurs, un tel système de vanne s'avère onéreux et compliqué à réaliser, notamment en ce qui concerne la réalisation de l'étanchéité entre le tuyau flexible et le tube rigide et du raccordement de ce système de vanne sur une ligne.

Le but de la présente invention est de proposer une autre solution pour interrompre la circulation de fluide véhiculé, palliant aux inconvénients précités.

Dans ce but, l'invention propose un tuyau flexible, destiné à transporter un fluide, caractérisé par le fait qu'il comprend un tuyau intérieur flexible et un tuyau extérieur flexible disposés concentriquement par rapport à l'axe longitudinal du tuyau flexible, la surface interne du tuyau intérieur définissant le passage du tuyau flexible pour le fluide à transporter, au moins un intercalaire de décollement intercalé entre le tuyau intérieur et le tuyau extérieur définissant une zone de décollement longitudinale où les deux tuyaux ne sont pas liés l'un à l'autre, ladite zone de décollement présentant une section transversale qui s'étend sur une majeure partie de l'interface à la périphérie entre le tuyau intérieur et le tuyau extérieur, le tuyau extérieur comporte au moins une ouverture débouchant dans ladite zone de décollement, destinée à permettre l'injection ou l'éjection d'un fluide sous pression dans ladite zone de décollement afin de déformer élastiquement le tuyau intérieur et d'obturer ou libérer respectivement le passage du tuyau flexible.

Ainsi, dans la présente invention, la fonction de vanne d'arrêt du fluide véhiculé est intégrée dans le tuyau flexible lui-même.

Selon une particularité, le tuyau flexible comprend, disposés radialement de l'intérieur vers l'extérieur par rapport à l'axe longitudinal du tuyau flexible,
- un premier tube interne élastomère, éventuellement une première armature de renfort et un premier tube intermédiaire, formant le tuyau intérieur précité,
- l'intercalaire de décollement,
- un deuxième tube intermédiaire élastomère, éventuellement une armature de renfort et une couche de revêtement externe élastomère, formant le tuyau extérieur précité.

Avantageusement, l'intercalaire de décollement est constitué par un film plastique non adhérent aux élastomères et/ou une substance anti-collante et/ou une couche textile saturée, ayant une basse résistance à la déchirure au cisaillement.

Selon un mode de réalisation, l'intercalaire de décollement s'étend jusqu'à au moins l'une des extrémités du tuyau flexible, ladite extrémité étant munie d'un système d'assemblage apte à serrer les extrémités des tuyaux intérieur et extérieur pour assurer l'étanchéité de la zone de décollement.

Selon un mode de réalisation, le système d'assemblage comprend une tubulure emmanchée dans le tuyau intérieur et des moyens de serrage venant contre la surface externe du tuyau flexible et aptes à serrer les extrémités des tuyaux intérieur et extérieur contre la tubulure pour les assembler hermétiquement.

Avantageusement, la tubulure à l'extrémité du tuyau flexible présente une partie externe permettant d'assembler les moyens de serrage à la tubulure et/ou destinée au raccordement du tuyau flexible à une ligne de transport de fluide.

Selon un mode de réalisation, l'intercalaire de décollement s'étend sensiblement sur toute la longueur du tuyau flexible, chaque extrémité du tuyau flexible étant munie d'un système d'assemblage.

Selon une autre particularité, le tuyau flexible comprend un seul intercalaire de décollement présentant une section transversale elliptique, généralement circulaire, de sorte que le tuyau intérieur et le tuyau extérieur sont séparés entièrement l'un de l'autre par ledit intercalaire de décollement, et/ou deux intercalaires de décollement séparés par deux zones longitudinales de liaison diamétralement opposées où le tuyau intérieur et le tuyau extérieur adhèrent l'un à l'autre, chaque zone longitudinale ayant une section transversale dont le secteur angulaire est compris entre 5° et 20°, et/ou un seul intercalaire de décollement présentant une section transversale s'étendant sur un angle compris entre 290 et 250°, le tuyau intérieur et le tuyau extérieur adhérant l'un à l'autre sur une zone longitudinale de liaison présentant une section transversale s'étendant sur un angle compris entre 110 et 70°.

Avantageusement, le tuyau extérieur comprend au moins une valve disposée dans ladite ouverture du tuyau extérieur et destinée à être raccordée à un tuyau d'alimentation de fluide sous pression.

Un autre but de la présente invention est de proposer un procédé de fabrication d'un tel tuyau flexible.

Le procédé de fabrication d'un tuyau flexible selon l'invention, se caractérise en ce qu'il comprend successivement :
- une étape de réalisation d'un tuyau intérieur en élastomère cru,
- une étape de pose d'au moins un intercalaire de décollement sur ledit tube intérieur,
- une étape de réalisation d'un tuyau extérieur en élastomère cru sur ledit intercalaire de décollement,
- une étape de cuisson simultanée du tuyau intérieur et du tuyau extérieur,
- une étape éventuelle de découpe du tuyau flexible à la longueur souhaitée,
ledit procédé comprenant en outre une étape de réalisation d'au moins une ouverture à travers le tuyau extérieur au niveau dudit intercalaire.

Selon un mode de réalisation, l'étape de pose de l'intercalaire de décollement consiste à poser un intercalaire de décollement de sorte qu'il s'étende au moins jusqu'à l'une des extrémités des tuyaux intérieur et extérieur, l'étape de réalisation d'une ouverture consiste en la mise en place d'une valve à travers le tuyau extérieur, ladite mise en place de la valve consiste à écarter les tuyaux intérieur et extérieur l'un de l'autre en déformant le tuyau intérieur au moyen d'un outil écarteur inséré entre les tuyaux intérieur et extérieur par leurs extrémités précitées, à réaliser un trou sur le tuyau extérieur écarté du tuyau intérieur, à insérer une valve dans ledit trou en passant entre les deux tuyaux écartés et à fixer ladite valve au tuyau extérieur, ledit procédé comprenant une étape d'assemblage hermétique des extrémités des tuyaux extérieur et intérieur.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence au dessin schématique annexé.

Sur ce dessin :
- la figure 1 représente une vue en perspective partielle et en coupe d'un tuyau flexible de l'art antérieur ;
- la figure 2 représente une vue en perspective partielle et en coupe d'un tuyau flexible selon la présente invention ;
- la figure 3A représente une vue en coupe transversale du tuyau flexible de la figure 2 avant sa vulcanisation ;
- les figures 3B et 3C représentent des vues en coupe transversale d'un tuyau flexible, avant sa vulcanisation, selon deux variantes de réalisation ;
- la figure 4A représente une vue en coupe longitudinale d'un tuyau flexible après sa vulcanisation, illustrant l'étape de mise en place de la valve au moyen d'un outil écarteur ;
- la figure 4B représente une vue en coupe transversale du tuyau flexible selon le plan IVB de la figure 4A ;
- la figure 5A représente une vue en coupe longitudinale du tuyau flexible de la figure 1 après la mise en place de la valve ;
- la figure 5B représente une vue en coupe transversale du tuyau flexible selon le plan VB de la figure 5A ;
- les figures 6A, 6B, 6C représentent respectivement une vue en perspective, une vue de dessus et une vue de côté d'un outil écarteur destiné à être utilisé pour l'étape de mise en place de la valve ;
- les figures 7A et 7C représentent respectivement une vue de côté, et une vue de dessus d'une valve avant sa mise en place sur le tuyau flexible ;
- la figure 7B représente une vue en coupe de la valve selon le plan VIIB de la figure 7A;
- la figure 8 représente une vue en coupe longitudinale du tuyau flexible selon l'invention en position d'obturation ; et,
- la figure 9 représente un agrandissement d'une extrémité du tuyau flexible de la figure 8, illustrant le système d'assemblage du tuyau flexible.

En référence aux figures 2, 3A, 8 et 9, le tuyau flexible 5 selon l'invention comprend différents éléments superposés, concentriquement par rapport à l'axe longitudinal L du tuyau flexible. Suivant la figure 2 en particulier, le tuyau flexible 5 comprend, disposés radialement de l'intérieur vers l'extérieur, un tube interne 6 en élastomère dont la surface intérieure constitue le passage 13 du tuyau flexible destiné à transporter un fluide, une première armature de renfort 7, un premier tube intermédiaire 8 élastomère, un intercalaire de décollement 9, un deuxième tube intermédiaire 10 élastomère, une deuxième armature de renfort 11 élastomère et un revêtement externe 12 élastomère. Les armatures de renfort 7, 11 sont constituées par des câbles métalliques noyés dans une couche élastomère. L'intercalaire de décollement 9 est constitué d'un film plastique qui n'adhère pas aux élastomères, et plus particulièrement au matériau élastomère constituant les premier et deuxième tubes intermédiaires 8, 10. Le film plastique recouvre entièrement le premier tube intermédiaire 8 sur toute la longueur du tuyau flexible et empêche l'adhésion des deux tubes intermédiaires 8, 10 lors de la vulcanisation du tuyau flexible tel que décrit ci-après. Le tube interne 6, la première armature de renfort 7 et le premier tube intermédiaire 8 sont liés entre eux et constituent un premier tuyau, appelé tuyau intérieur 14, et le deuxième tube intermédiaire 10, la deuxième armature de renfort 11 et le revêtement intérieur 12 sont liés entre eux et constituent un deuxième tuyau, appelé ci-après tuyau extérieur 15. Le film plastique forme une zone de décollement 16 annulaire entre le tuyau intérieur et le tuyau extérieur. Le tuyau flexible est ainsi formé de deux tuyaux 6, 7 superposés, parfaitement concentriques et séparés par une zone de décollement 16. Le tuyau flexible selon l'invention présente une section transversale elliptique, et en particulier circulaire dans le présent mode de réalisation.

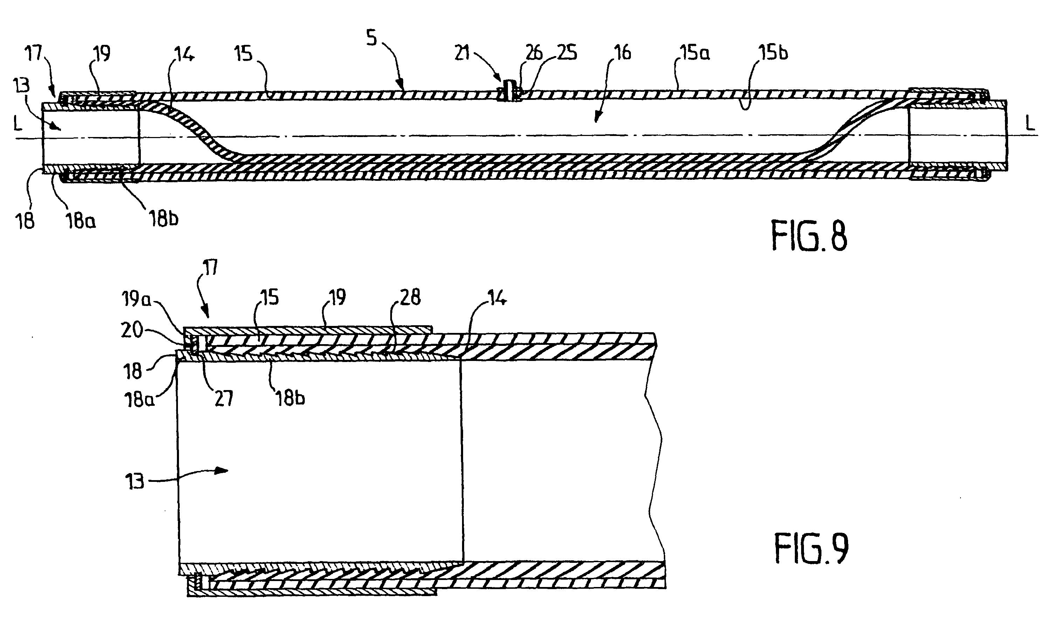

Suivant les figures 8 et 9, chaque extrémité du tuyau flexible est munie d'un système d'assemblage 17 permettant, d'une part, d'assembler hermétiquement les extrémités du tuyau intérieur 14 et du tuyau extérieur 15, afin de former une zone de décollement 16 entre les deux tuyaux 14, 15 qui soit étanche, et d'autre part, de raccorder le tuyau flexible 5 selon l'invention à un autre tuyau flexible de la ligne ou à un équipement particulier. Le système d'assemblage comprend une tubulure 18 crantée, en acier, partiellement insérée dans le tube interne 6 du tuyau intérieur 14. La tubulure comprend une partie crantée 18b insérée dans le tuyau intérieur 14 et une partie externe 18a s'étendant à l'extérieur du tuyau flexible. Les extrémités du tuyau intérieur présente de préférence un alésage 28, dans lequel la partie crantée 18b de la tubulure est insérée, de sorte que le diamètre interne du passage 13 du tuyau flexible soit sensiblement constant sur toute la longueur du tuyau flexible. Une jupe tubulaire externe 19, en acier ou aluminium, est sertie sur l'extérieur du tuyau flexible, plus précisément contre la surface externe 15a du tuyau extérieur 15 constituée par la surface externe du revêtement externe 12. La jupe 19 est solidarisée longitudinalement avec la partie externe 18b de la tubulure par l'intermédiaire d'un anneau élastique ou circlips 20 positionné dans une gorge annulaire 27 de la partie externe 18a sur lequel vient s'appuyer l'extrémité 19a courbée radialement vers l'intérieur de la jupe. Les moyens de serrage constitués par la jupe peuvent éventuellement être remplacés par des modèles de colliers. La partie externe 18a de la tubulure comporte un filetage ou une bride annulaire (non représenté), destiné au raccordement du tuyau flexible à un tuyau flexible classique ou un équipement.

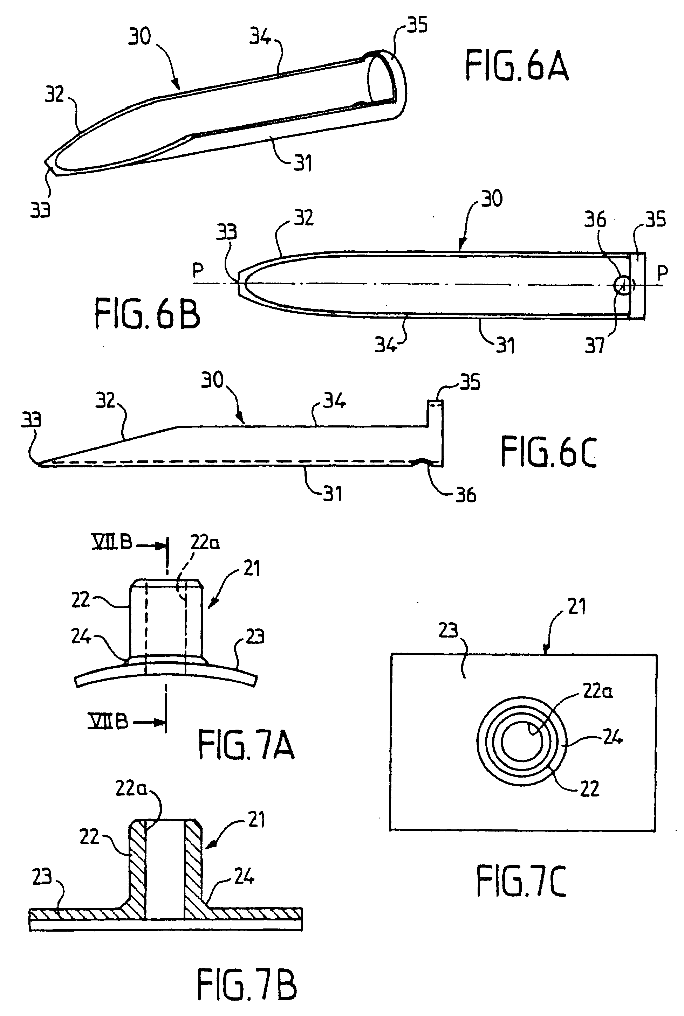

Une valve 21 est fixée sur le tuyau extérieur 15 et débouche dans la zone de décollement 16. Suivant les figures 7A-7C et 8, la valve 21 est formée d'un tube métallique 22, muni d'un perçage 22a et relié à une contre-plaque 23 par une soudure étanche 24. Le tube métallique est soudé dans l'alignement d'un perçage traversant de la contre-plaque. Le tube métallique est inséré dans une ouverture du tuyau extérieur 15 constituée par un trou cylindrique 25 et comporte une partie externe en saillie par rapport à la surface externe 15a du tuyau extérieur, la contre-plaque 23 étant en appui contre la surface intérieure 15b du tuyau extérieur, constituée par la surface intérieure du deuxième tube intermédiaire 10. La contre-plaque présente un rayon de courbure sensiblement égal à celui dudit tube intermédiaire 10. La valve est fixée au tuyau par l'intermédiaire d'un écrou 26 vissé sur la partie saillante du tube métallique de la valve. Un petit tuyau d'alimentation peut être connecté à la valve pour amener un fluide sous pression, par exemple de l'air comprimé, dans la zone de décollement 16. Cette connexion s'effectue par exemple par l'intermédiaire du filetage précité présent sur la partie externe du tube métallique de la valve.

Le tuyau flexible peut se monter sur une ligne de transport de fluide, comme un tuyau classique, tel que celui illustré à la figure 1. Lorsqu'il n'y a pas d'apport de fluide sous pression par la valve, le tuyau flexible fonctionne comme un tuyau flexible classique, le tuyau étant dans une position dite ouverte, dans laquelle le tuyau présente un passage 13 intégral, de forme cylindrique. Il peut éventuellement subsister une légère protubérance dans le passage 13 en face la valve. Lorsque l'on injecte un fluide sous pression par la valve 21 dans la zone de décollement 16 étanche, et que cette pression dépasse la pression du fluide véhiculé dans le flexible additionnée de la pression nécessaire pour déformer la carcasse du tuyau intérieur, le tuyau intérieur 14 s'affaisse sur lui-même, obstruant totalement le passage 13 du tuyau flexible et assurant une étanchéité complète. Cette position d'obturation du tuyau flexible est illustrée à la figure 8. Lorsque l'on ramène la pression à zéro au niveau de la valve et ainsi dans la zone de décollement, par exemple en reliant la valve à l'extérieur pour permettre au fluide sous pression présent dans la zone de décollement de s'échapper, l'élasticité du tuyau intérieur et éventuellement l'action du fluide véhiculé permettent au tuyau intérieur 14 de récupérer sa géométrie initiale, correspondant à la position ouverte du tuyau flexible avec son passage intégral. Le cas échéant, le retour du tuyau intérieur dans sa position initiale peut être amélioré ou assuré en appliquant le vide au niveau de la valve pour en retirer sous vide le fluide présent dans la zone de décollement.

Une description détaillée du procédé de fabrication selon l'invention d'un tuyau flexible décrit précédemment va à présent être effectuée. Le procédé selon l'invention consiste à fabriquer simultanément deux tuyaux superposés, parfaitement concentriques, mais séparés par une zone de décollement.

Le tuyau flexible 5 est réalisé sur un mandrin qui sera passé deux fois dans une machine connue de l'art antérieur, soit une machine d'un premier type, comprenant des tours de confection, soit une machine d'un deuxième type, comprenant des lignes d'extrusion combinées avec des machines de tressage ou de guipage équipées d'une tête de rubanage. Lors d'un premier passage, on effectue la pose du tube interne 6, de la première armature de renfort 7, du premier tube intermédiaire 8 et de l'intercalaire de décollement 9. L'intercalaire de décollement est constitué par un film plastique, par exemple un film polyester, qui conviendra pour une majorité des matériaux élastomères utilisés. La pose de l'intercalaire peut consister également à poser une couche textile saturée, séparant totalement les deux tuyaux, ayant une basse résistance à la déchirure au cisaillement et pouvant être constituée par différents produits non tissés existants, ou à appliquer un badigeon contenant une substance anti-collante. Ce badigeon peut être constitué à partir des mélanges à base de silicone diluée couramment utilisés pour empêcher les tuyaux de coller aux mandrins de confection lors de l'opération de vulcanisation. Lors du deuxième passage du mandrin, on effectue la pose du deuxième tube intermédiaire 10, de la deuxième armature de renfort 11 et du revêtement externe 12. On réalise ensuite une seule opération de rubanage d'une sangle en nylon et une seule étape de cuisson ou vulcanisation. Lors de la vulcanisation, le film plastique empêche l'adhésion des deux tubes intermédiaires. Le tube interne 6, la première armature de renfort 7 et le premier tube intermédiaire 8 se lient entre eux et forment le tuyau intérieur 14, et le deuxième tube intermédiaire 10, la deuxième armature de renfort 11 et le revêtement intérieur 12 se lient entre eux et forment le tuyau extérieur 15. Il est également possible d'utiliser une machine du deuxième type précité, équipée d'un nombre suffisant de têtes de pose d'armature de renfort pour permettre la fabrication du tuyau flexible en un seul passage.

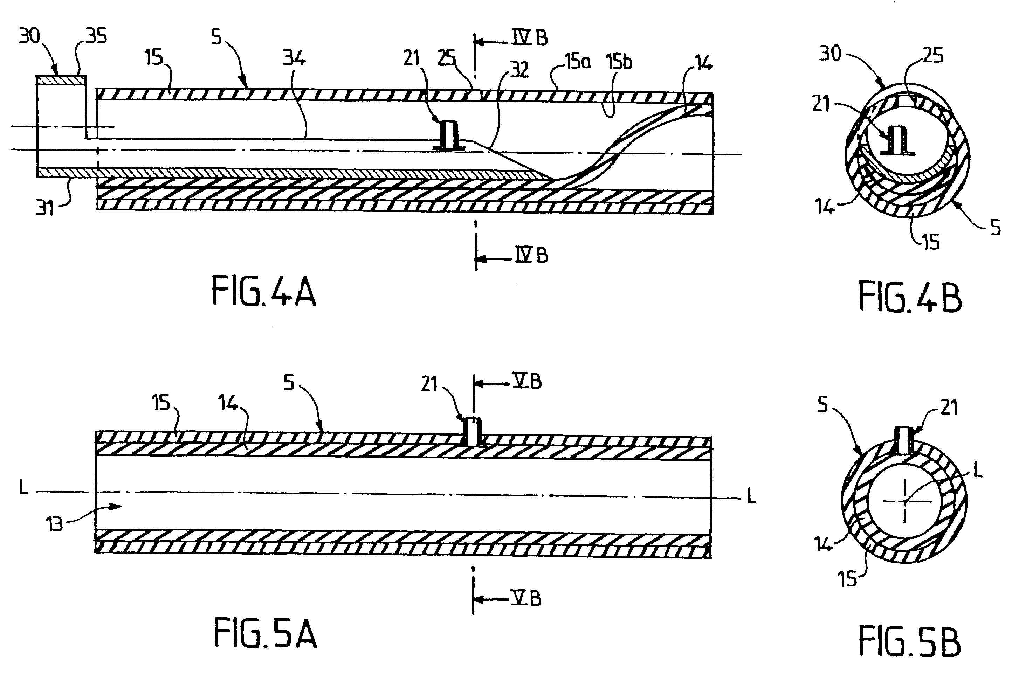

Après vulcanisation, le tuyau flexible est découpé à la longueur souhaitée. La longueur du tuyau flexible sera définie en fonction du diamètre du tuyau et de sa structure, dans une fourchette de 3 à 15 fois le diamètre intérieur. Suivant la figure 4, un outil écarteur 30 est ensuite introduit entre le tuyau intérieur et le tuyau extérieur, plus précisément entre les tubes intermédiaires, pour permettre d'une part le perçage par l'extérieur d'un trou cylindrique 25 dans le tuyau extérieur, à savoir à travers le revêtement externe, la deuxième armature de renfort et le deuxième tube intermédiaire, et éventuellement le film plastique constituant l'intercalaire, sans endommager le tuyau intérieur, et d'autre part l'introduction de la valve 21 entre les deux tubes intermédiaires, pour la loger dans le trou réalisé.

Suivant les figures 6A-6C, l'outil écarteur 30 est constitué d'une gouttière 31 présentant une première partie 32 partant d'une extrémité 33 de section transversale plane qui évolue progressivement pour prendre une forme générale demi-circulaire. Cette première partie 32 à section transversale évolutive se prolonge par une deuxième partie 34 de forme générale demi-circulaire, qui se termine par une deuxième extrémité 35 de section transversale circulaire. La deuxième partie présente par exemple une section transversale s'étendant sur un angle compris entre 170 et 200°. La gouttière 31 présente un perçage 36 traversant dont l'axe 37 est disposé selon le plan longitudinal P de la gouttière, perpendiculairement à la deuxième extrémité circulaire 35 et légèrement décalé par rapport à cette extrémité circulaire. Cette extrémité circulaire 35 et le perçage permettent l'assemblage d'un outil d'insertion pour effectuer l'insertion de l'outil écarteur entre les tuyaux intérieur et extérieur. A titre d'exemple, cet outil d'insertion comprend un corps tubulaire apte à être emmanché dans l'extrémité circulaire 35 et présentant un pion venant s'insérer dans le perçage 36. Cet outil écarteur 30 peut être réalisé à partir d'un tube en aluminium, en effectuant différentes découpes, les différentes arêtes vives provenant des découpes étant mouchées pour éviter toute dégradation des tuyaux intérieur et extérieur. L'outil écarteur 30 est inséré progressivement par sa première extrémité 33 entre le tuyau intérieur 14 et le tuyau extérieur 15 pour écarter les deux tuyaux l'un de l'autre en déformant le tuyau intérieur, tel que représenté aux figures 4A et 4B. La première partie 32 de l'outil écarteur permet l'introduction progressive de l'outil entre les deux tuyaux, tandis que sa deuxième partie 34 permet d'écarter l'un de l'autre les deux tuyaux. Le trou cylindrique 25 peut alors être réalisé sur le tuyau extérieur et la valve 21 peut être ensuite logée dans le trou en passant dans la gouttière formant l'outil écarteur. La fixation de la valve est ensuite réalisée en vissant un écrou 26 sur la partie externe de la valve, la contre-plaque 23 venant en appui contre la surface interne 15b du tuyau extérieur. Une fois la valve mise en place et l'outil écarteur retiré, le tuyau intérieur 14 reprend sa position initiale grâce à son élasticité propre, tel que représenté à la figure 5.

Un alésage 28 est ensuite réalisé à chaque extrémité du tuyau intérieur et une tubulure 18 est emmanchée légèrement en force dans l'alésage. Les jupes externes 19 sont ensuite serties sur le tuyau flexible. Elles sont solidarisées longitudinalement aux tubulures 18 par l'intermédiaire de l'anneau élastique 20. Dans une variante de réalisation, pour chaque extrémité du tuyau flexible, la jupe est emmanchée sans forçage sur le tuyau extérieur, et la tubulure, après introduction sans forçage dans le tuyau intérieur, est expansée en force à l'aide d'un dudgeon de façon à comprimer les tuyaux intérieur et extérieur contre la jupe externe qui, dans ce cas, ne se déforme pas. Cette opération est connue sous le nom de dudgeonnage.

La fabrication simultanée des tuyaux intérieur et extérieur pour réaliser le tuyau flexible selon l'invention permet bien entendu de réaliser des gains économiques importants, mais permet également d'obtenir un ajustement dimensionnel parfait du tuyau intérieur dans le tuyau extérieur. Cet ajustement dimensionnel présente l'avantage de pouvoir raccorder les deux tuyaux constituant le tuyau flexible selon l'invention comme un tuyau classique. Le système d'assemblage du tuyau intérieur et du tuyau extérieur peut être constitué par un système de raccordement utilisé pour les tuyaux flexibles classiques. On évite les frais liés aux opérations d'emmanchement d'un tuyau dans l'autre, et la conception de raccords spécifiques et compliqués. En effet, l'emmanchement de deux tuyaux fabriqués indépendamment nécessite de prévoir un jeu important entre le diamètre extérieur du tuyau intérieur et le diamètre intérieur du tuyau extérieur. Ce jeu ne permet pas l'utilisation des méthodes de raccordement simples car lorsque l'on veut comprimer le tuyau extérieur sur le tuyau intérieur et la tubulure, le tuyau extérieur se déforme en formant des plis qui empêchent l'obtention d'une étanchéité correcte. Par ailleurs, cet ajustement dimensionnel parfait permet de bénéficier de l'apport des deux armatures de renfort avec un rendement très proche, pour la résistance du tuyau flexible à la pression du fluide véhiculé, en particulier pour des armatures de renfort comprenant des câbles en acier, dont l'allongement sous traction avant rupture est très faible.

Le tuyau flexible selon l'invention, intégrant une fonction de vanne d'arrêt du fluide véhiculé, peut être utilisé dans différents domaines d'applications, en particulier dans tous les domaines d'utilisation de lignes de tuyaux flexibles en élastomères armées. L'utilisation d'un tuyau flexible selon l'invention dans une telle ligne, intercalé entre deux tuyaux flexibles classiques ou monté en bout de ligne, permet d'éviter l'adjonction de vannes, robinets ou pinces externes supplémentaires sur la ligne et permet de conserver la flexibilité de la ligne. Il peut également être utilisé dans le domaine des canalisations rigides.

Un exemple de réalisation d'un tuyau flexible, destiné à être monté en extrémité des flèches d'épandage utilisées derrière des pompes à béton, va à présent être décrit. Le tuyau flexible réalisé présente la structure suivante :
- un tube interne 6 en caoutchouc naturel renforcé, résistant à l'abrasion, d'une épaisseur de 6 mm, et de 125 mm de diamètre intérieur ;
- une première et deuxième armature de renfort 7, 11, chacune constituée par deux nappes de câbles acier guipées à +54,7° et -54,7°, et noyées dans du caoutchouc naturel, le câble choisi présente une vie de fatigue en flexion très élevée, démontrée par une utilisation dans la fabrication de pneumatiques pour véhicules poids lourds. Il est laitonné, et l'élastomère en contact est formulé pour obtenir une parfaite adhérence de l'élastomère sur l'acier après vulcanisation. L'épaisseur totale de chaque armature de renfort est de 4 mm;
- un premier et deuxième tube intermédiaire 8, 10 en caoutchouc naturel, chacun d'une épaisseur de 2 mm ;
- un intercalaire de décollement en film polyester d'une épaisseur de 0,1 mm ;
- un revêtement externe 12 en caoutchouc naturel renforcé résistant à l'abrasion d'une épaisseur de 3 mm.

Le tuyau flexible a été fabriqué sur un mandrin de 40 mètres. Le tuyau a ensuite été tronçonné en un morceau de 1 mètre et l'outil écarteur, représenté aux figures 6A-6C, a été utilisé pour réaliser un trou de 16 mm de diamètre et insérer la valve représentée aux figures 7A-7C. Les extrémités du tuyau flexible ont ensuite été assemblées par le système d'assemblage 17, tel que décrit précédemment. Le tuyau flexible étant vide, la zone de décollement entre les tubes intermédiaires a été pressurisée. Une obturation complète du tuyau flexible a été obtenue pour une pression de gonflage de 3.10⁵ Pa. Plusieurs cycles ont été effectués et ont permis de vérifier un repositionnement correct du tuyau intérieur. Même en l'absence de contre-pression dans le tuyau flexible, le tuyau intérieur reprend parfaitement sa place sous l'effet de son élasticité propre. L'étanchéité de la zone de décollement entre les tubes intermédiaires a également été éprouvée par une montée à 50.10⁵ Pa, sans qu'aucune fuite ne puisse être décelée au niveau du système d'assemblage. Dans cette application particulière, le tuyau flexible est raccordé à l'extrémité d'une ligne de tuyaux flexibles classiques d'épandage de béton, et sert à stopper l'écoulement gravitaire du béton contenu dans la flèche d'épandage, lors des phases de manoeuvre de la flèche d'épandage entre les opérations de pompage. Dans ces phases, la pompe principale de circulation du béton, d'une pression maximale de 80.10⁵ Pa, est stoppée et l'obturation du passage du tuyau flexible selon l'invention est réalisée en injectant de l'air comprimé à 8.10⁵ Pa par la valve.

Dans le procédé de fabrication décrit précédemment, il est nécessaire que l'intercalaire de décollement s'étende au moins jusqu'à l'une des extrémités du tuyau flexible, tout au moins, après l'opération de découpe, pour effectuer la mise en place de la valve. Il est bien entendu possible de prévoir un intercalaire de décollement qui ne s'étend pas jusqu'aux extrémités du tuyau flexible et de réaliser une étape de mise en place de 1a valve sur le tuyau extérieur, avant l'étape de vulcanisation.

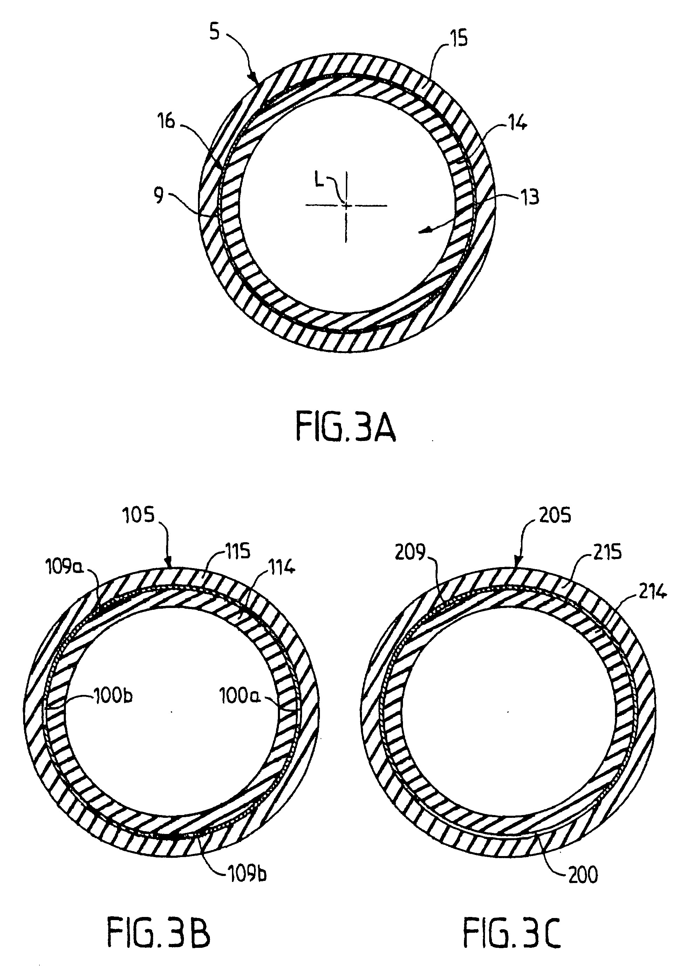

Selon des variantes de réalisation, le tuyau flexible comprend un ou plusieurs intercalaires de décollement ne recouvrant que partiellement le premier tube intermédiaire. Suivant la figure 3B, illustrant un tuyau intérieur 114 et le tuyau extérieur 115 formant un tuyau flexible 105 avant vulcanisation, deux intercalaires de décollement 109a, 109b sont disposés entre les deux tuyaux de manière à conserver deux zones longitudinales 100a, 100b diamétralement opposées non recouvertes par les intercalaires, s'étendant sur toute la longueur du tuyau flexible. Les deux intercalaires recouvrent la majeure partie du tuyau intérieur, plus précisément le premier tube intermédiaire dudit tuyau intérieur, chaque zone longitudinale de liaison 100a, 100b non recouverte ayant une section transversale s'étendant sur un secteur angulaire compris par exemple entre 5° et 20°. Dans cette configuration, lors de la vulcanisation, le tuyau intérieur et le tuyau extérieur adhèreront l'un à l'autre au niveau des zones non recouvertes et deux zones de décollement diamétralement opposées seront formées. Dans ce mode de réalisation, une valve est assemblée au niveau de chaque zone de décollement. Suivant la figure 3C, un intercalaire de décollement 209 est disposé entre le tuyau intérieur 214 et le tuyau extérieur 215 formant le tuyau flexible 205, de manière à conserver une zone longitudinale de liaison 200 non recouverte par l'intercalaire, s'étendant sur toute la longueur du tuyau flexible. L'intercalaire recouvre la majeure partie du premier tube intermédiaire dudit tuyau intérieur, la zone non recouverte ayant une section transversale s'étendant sur un secteur angulaire inférieur à 180°, par exemple compris entre 110 et 70°, par exemple de l'ordre de 90°. Dans cette configuration, lors de la vulcanisation, le tuyau intérieur et le tuyau extérieur adhèreront l'un à l'autre au niveau de la zone non recouverte et une zone de décollement, s'étendant sur un secteur angulaire compris entre 290° et 250°, sera formée. Dans ces deux variantes, les zones de décollement particulières permettent de mieux maîtriser la déformation du tuyau intérieur pour obturer le passage 13. Par ailleurs, la liaison entre les deux tuyaux au niveau des zones non recouvertes évite un déplacement longitudinal des tuyaux intérieur et extérieur l'un par rapport à l'autre lors de l'opération de sertissage des jupes externes 19.

Bien que l'invention ait été décrite en liaison avec un mode de réalisation particulier, elle n'y est nullement limitée et elle comprend tous les équivalents techniques des moyens décrits ainsi que leurs combinaisons si celles-ci entrent dans le cadre de l'invention telle que définie par les revendications.

## Revendications

1. Tuyau flexible (5) destiné à transporter un fluide, **caractérisé par le fait qu'**il comprend un tuyau intérieur flexible (14) et un tuyau extérieur flexible (15) disposés concentriquement par rapport à l'axe longitudinal (L) du tuyau flexible, la surface interne du tuyau intérieur définissant le passage (13) du tuyau flexible pour le fluide à transporter, au moins un intercalaire de décollement (9) intercalé entre le tuyau intérieur (14) et le tuyau extérieur (15) définissant une zone de décollement longitudinale (16) où les deux tuyaux ne sont pas liés l'un à l'autre, ladite zone de décollement présentant une section transversale qui s'étend sur une majeure partie de l'interface à la périphérie entre le tuyau intérieur et le tuyau extérieur, le tuyau extérieur comporte au moins une ouverture (25) débouchant dans ladite zone de décollement, destinée à permettre l'injection ou l'éjection d'un fluide sous pression dans ladite zone de décollement afin de déformer élastiquement le tuyau intérieur et d'obturer ou libérer respectivement le passage du tuyau flexible.

2. Tuyau flexible (5) selon la revendication 1, **caractérisé par le fait qu'**il comprend, disposés radialement de l'intérieur vers l'extérieur par rapport à l'axe longitudinal (L) du tuyau flexible,
- un premier tube interne élastomère (6), éventuellement une première armature de renfort (7) et un premier tube intermédiaire (8), formant le tuyau intérieur (14) précité,
- l'intercalaire de décollement (9),
- un deuxième tube intermédiaire élastomère (10), éventuellement une armature de renfort (11) et une couche de revêtement externe élastomère (12), formant le tuyau extérieur précité.

3. Tuyau flexible (5) selon la revendication 2, **caractérisé par le fait que** l'intercalaire de décollement (9) est constitué par un film plastique non adhérent aux élastomères et/ou une substance anti-collante et/ou une couche textile saturée, ayant une basse résistance à la déchirure au cisaillement.

4. Tuyau flexible (5) selon l'une des revendications 1 à 3, **caractérisé par le fait que** l'intercalaire de décollement (9) s'étend jusqu'à au moins l'une des extrémités du tuyau flexible, ladite extrémité étant munie d'un système d'assemblage (17) apte à serrer les extrémités des tuyaux intérieur et extérieur pour assurer l'étanchéité de la zone de décollement (16).

5. Tuyau flexible (5) selon la revendication 4, **caractérisé par le fait que** le système d'assemblage (17) comprend une tubulure (18) emmanchée dans le tuyau intérieur (14) et des moyens de serrage (19) venant contre la surface externe du tuyau flexible et aptes à serrer les extrémités des tuyaux intérieur et extérieur contre la tubulure pour les assembler hermétiquement.

6. Tuyau flexible (5) selon la revendication 5, **caractérisé par le fait que** la tubulure (18) à l'extrémité du tuyau flexible présente une partie externe (18a) permettant d'assembler les moyens de serrage (19) à la tubulure et/ou destinée au raccordement du tuyau flexible à une ligne de transport de fluide.

7. Tuyau flexible (5, 105, 205) selon l'une des revendications précédentes, **caractérisé par le fait qu'**il comprend un seul intercalaire de décollement (9) présentant une section transversale elliptique, de sorte que le tuyau intérieur (14) et le tuyau extérieur (15) sont séparés entièrement l'un de l'autre par ledit intercalaire de décollement, et/ou deux intercalaires de décollement (109a, 109b) séparés par deux zones longitudinales de liaison (100a, 100b) diamétralement opposées où le tuyau intérieur (114) et le tuyau extérieur (115) adhèrent l'un à l'autre, chaque zone longitudinale ayant une section transversale dont le secteur angulaire est compris entre 5° et 20°, et/ou un seul intercalaire de décollement (209) présentant une section transversale s'étendant sur un angle compris entre 290 et 250°, le tuyau intérieur (214) et le tuyau extérieur (215) adhérant l'un à l'autre sur une zone longitudinale de liaison (200) présentant une section transversale s'étendant sur un angle compris entre 110 et 70°.

8. Tuyau flexible (5) selon l'une des revendications précédentes, **caractérisé par le fait que** le tuyau extérieur (14) comprend au moins une valve (21) disposée dans ladite ouverture (25) du tuyau extérieur et destinée à être raccordée à un tuyau d'alimentation de fluide sous pression.

9. Procédé de fabrication d'un tuyau flexible (5) selon l'une des revendications 1 à 8, **caractérisé par le fait qu'**il comprend successivement :
- une étape de réalisation d'un tuyau intérieur (14) en élastomère cru,
- une étape de pose d'au moins un intercalaire de décollement (9) sur ledit tube intérieur,
- une étape de réalisation d'un tuyau extérieur (15) en élastomère cru sur ledit intercalaire de décollement,
- une étape de cuisson simultanée du tuyau intérieur et du tuyau extérieur,
- une étape éventuelle de découpe du tuyau flexible à la longueur souhaitée,
ledit procédé comprenant en outre une étape de réalisation d'au moins une ouverture (25) à travers le tuyau extérieur au niveau dudit intercalaire.

10. Procédé selon la revendication 9, **caractérisé par le fait que** l'étape de pose de l'intercalaire de décollement (9) consiste à poser un intercalaire de décollement de sorte qu'il s'étende au moins jusqu'à l'une des extrémités des tuyaux intérieur (14) et extérieur (15), l'étape de réalisation d'une ouverture consiste en la mise en place d'une valve (21) à travers le tuyau extérieur, ladite mise en place de la valve consistant à écarter les tuyaux intérieur (14) et extérieur (15) l'un de l'autre en déformant le tuyau intérieur au moyen d'un outil écarteur (30) inséré entre les tuyaux intérieur et extérieur par leurs extrémités précitées, à réaliser un trou sur le tuyau extérieur écarté du tuyau intérieur, à insérer une valve dans ledit trou en passant entre les deux tuyaux écartés et à fixer ladite valve au tuyau extérieur, ledit procédé comprenant une étape d'assemblage hermétique desdites extrémités des tuyaux extérieur (15) et intérieur (14).

## Patentansprüche

1. Schlauch (5), der dazu bestimmt ist, ein Fluid zu transportieren, **dadurch gekennzeichnet, dass** er einen biegsamen inneren Schlauch (14) und einen biegsamen äußeren Schlauch (15) umfasst, die konzentrisch zu der Längsachse (L) des Schlauchs angeordnet sind,. wobei die interne Fläche des inneren Schlauchs den Durchgang (13) des biegsamen Schlauchs für das zu transportierende Fluid festlegt, mindestens eine Ablösezwischenschicht (9), die zwischen dem inneren Schlauch (14) und dem äußeren Schlauch (15) eingefügt ist und eine Längsablösezone (16) definiert, an der die zwei Schläuche nicht miteinander verbunden sind, wobei die Längsablösezone einen Querschnitt aufweist, der sich über einen Großteil der Schnittfläche an der Peripherie zwischen dem inneren und dem äußeren Schlauch erstreckt, wobei der äußere Schlauch mindestens eine Öffnung (25) umfasst, die in die Abhebezone mündet, die dazu bestimmt ist, das Einspritzen oder Auswerfen eines Fluids unter Druck in die Abhebezone zu erlauben, um den inneren Schlauch elastisch zu verformen und den Durchgang des biegsamen Schlauchs jeweils zu verschließen oder freizugeben.

2. Biegsamer Schlauch (5) nach Anspruch 1, **dadurch gekennzeichnet, dass** er radial von innen nach außen in Bezug auf die Längsachse (L) des biegsamen Schlauchs Folgendes umfasst:
- eine erste innere Elastomerröhre (6), eventuell eine erste Verstärkungsarmierung (7) und eine erste Zwischenröhre (8), die den zuvor genannten inneren Schlauch (14) bildet,
- die Zwischenabhebeschicht (9),
- eine zweite Zwischenelastomerröhre (10), eventuell eine Verstärkungsarmierung (11) und eine äußere Elastomerbeschichtungsschicht (12), die den zuvor genannten äußeren Schlauch bildet.

3. Biegsamer Schlauch (5) nach Anspruch 2, **dadurch gekennzeichnet, dass** die Abhebezwischenschicht (9) aus einer Kunststofffolie besteht, die nicht auf Elastomeren haftet, und/oder aus einer Klebeschutzsubstanz und/oder einer gesättigten Textilschicht, die einen niedrigen Scherzerreißwiderstand hat.

4. Biegsamer Schlauch (5) nach einem der Ansprüche 1 bis 3, **dadurch gekennzeichnet, dass** sich die Abhebezwischenschicht (9) zumindest bis zu einem der Enden des biegsamen Schlauchs erstreckt, welches Ende mit einem Zusammenfügesystem (17) versehen ist, das die Enden des inneren und des äußeren Schlauchs spannen kann, um die Abdichtung der Abhebezone (16) sicherzustellen.

5. Biegsamer Schlauch (5) nach Anspruch 4, **dadurch gekennzeichnet, dass** das Zusammenfügesystem (17) einen Rohrstutzen (18) umfasst, der in den inneren Schlauch (14) geschrumpft ist, sowie Mittel zum Spannen (19), die gegen die äußeren Oberfläche des biegsamen Schlauchs kommen und die Enden des inneren und des äußeren Schlauchs gegen den Rohrstutzen spannen können, um sie hermetisch zusammenzufügen.

6. Biegsamer Schlauch (5) nach Anspruch 5, **dadurch gekennzeichnet, dass** der Rohrstutzen (18) am Ende des biegsamen Schlauchs einen äußeren Teil (18a) umfasst, der es erlaubt, Spannmittel (19) mit dem Rohrstutzen zusammenzufügen und/oder der dazu bestimmt ist, den biegsamen Schlauch an eine Fluidtransportleitung anzuschließen.

7. Biegsamer Schlauch (5, 105, 205) nach einem der vorhergehenden Ansprüche, **dadurch gekennzeichnet, dass** er eine einzige Abhebeschicht (9) umfasst, die einen elliptischen Querschnitt aufweist, so dass der innere Schlauch (14) und der äußere Schlauch (15) ganz voneinander durch die Abhebeschicht getrennt sind, und/oder zwei Abhebeschichten (109a, 109b), die von zwei Längsverbindungszonen (100a, 100b) getrennt sind, die einander da diametral gegenüber liegen, wo der innere Schlauch (114) und der äußere Schlauch (115) aneinander haften, wobei jede Längszone einen Querschnitt hat, dessen Winkelabschnitt zwischen 5° und 20° liegt, und/oder eine einzige Abhebeschicht (209), die einen Querschnitt aufweist, der sich über einen Winkel zwischen 290 und 250° erstreckt, wobei der innere (214) und der äußere Schlauch (215) über eine Verbindungslängszone (200) aneinander haften, die einen Querschnitt aufweist, der sich über einen Winkel zwischen 110 und 70° erstreckt.

8. Biegsamer Schlauch (5) nach einem der vorhergehenden Ansprüche, **dadurch gekennzeichnet, dass** der äußere Schlauch (14) mindestens ein Ventil (21) umfasst, das in der Öffnung (25) des äußeren Schlauchs angeordnet und dazu bestimmt ist, an einen Schlauch zur Versorgung mit Fluid unter Druck angeschlossen zu werden.

9. Herstellungsverfahren eines biegsamen Schlauchs (5) nach einem der Ansprüche 1 bis 8, **dadurch gekennzeichnet, dass** es nacheinander Folgendes umfasst:
- einen Herstellungsschritt des inneren Schlauchs (14) aus Rohelastomer,
- einen Verlegeschritt mindestens einer Abhebezwischenschicht (9) auf dem inneren Rohr,
- einen Herstellungsschritt eines äußeren Schlauchs (15) aus Rohelastomer auf der Zwischenabhebeschicht,
- einen Schritt des gleichzeitigen Brennens des inneren Schlauchs und des äußeren Schlauchs,
- einen eventuellen Schritt des Zuschneidens des biegsamen Schlauchs auf die gewünschte Länge,
wobei das Verfahren ferner einen Schritt der Herstellung mindestens einer Öffnung (25) durch den äußeren Schlauch auf der Ebene der Zwischenabhebeschicht umfasst.

10. Verfahren nach Anspruch 9, **dadurch gekennzeichnet, dass** der Schritt des Verlegens der Abhebezwischenschicht (9) darin besteht, eine Abhebezwischenschicht derart zu verlegen, dass sie sich über mindestens eines der Enden des inneren Schlauchs (14) und des äußeren Schlauchs (15) erstreckt, wobei der Schritt des Herstellens einer Öffnung im Anbringen eines Ventils (21) durch den äußeren Schlauch besteht, wobei das Anbringen des Ventils darin besteht, den inneren (14) und den äußeren (15) Schlauch voneinander zu spreizen, indem der innere Schlauch mittels eines Spreizwerkzeugs (30) verformt wird, das zwischen den inneren und den äußeren Schlauch über deren oben genannte Enden eingefügt wird, eine Bohrung auf dem äußeren, vom inneren Schlauch weggespreizten Schlauch herzustellen, ein Ventil in die Bohrung einzufügen, wobei zwischen den beiden auseinander gespreizten Schläuchen durchgegangen wird, und das Ventil am äußeren Schlauch zu befestigen, wobei das Verfahren einen Schritt des hermetischen Zusammenfügens der Enden des äußeren (15) und des inneren Schlauchs (14) umfasst.

## Claims

1. Flexible pipe (5) for transporting a fluid, **characterized in that** it comprises a flexible inner pipe (14) and a flexible outer pipe (15) that are placed concentrically with respect to the longitudinal axis (L) of the flexible pipe, the internal surface of the inner pipe defining the bore (13) of the flexible pipe for the fluid to be transported, at least one debonding interlayer (9) inserted between the inner pipe (14) and the outer pipe (15) and defining a longitudinal debonding region (16) where the two pipes are not bonded to each other, the said debonding region having a cross section which extends over a major portion of the interface at the periphery between the inner pipe and the outer pipe, the inner pipe has at least one opening (25) emerging in the said debonding region, the said opening being intended to allow a pressurized fluid to be injected into or discharged from the said debonding region so as to elastically deform the inner pipe and close off or free the bore of the flexible pipe, respectively.

2. Flexible pipe (5) according to Claim 1, **characterized in that** it comprises, placed radially from the inside to the outside with respect to the longitudinal axis (L) of the flexible pipe:
- an elastomeric internal first tube (6), optionally a first reinforcement (7) and a first intermediate tube (8), forming the aforementioned inner pipe (14);
- the debonding interlayer (9); and
- an elastomeric intermediate second tube (10), optionally a reinforcement (11) and an elastomeric external covering layer (12), forming the aforementioned outer pipe.

3. Flexible pipe (5) according to Claim 2, **characterized in that** the debonding interlayer (9) is formed by a plastic film that does not adhere to the elastomers and/or a non-stick substance and/or a saturated textile layer, having a low shear tear strength.

4. Flexible pipe (5) according to one of Claims 1 to 3, **characterized in that** the debonding interlayer (9) extends a far as at least one of the ends of the flexible pipe, the said end being provided with an assembly system (17) capable of clamping the ends of the inner and outer pipes in order to seal off the debonding region (16).

5. Flexible pipe (5) according to Claim 4, **characterized in that** the assembly system (17) comprises a tubing (18) fitted into the inner pipe (14) and clamping means (19) placed against the external surface of the flexible pipe and capable of clamping the ends of the inner and outer pipes against the tubing in order to join them together in a sealed manner.

6. Flexible pipe (5) according to Claim 5, **characterized in that** the tubing (18) at the end of the flexible pipe has an external part (18a) allowing the clamping means (19) to be joined to the tubing and intended for connecting the flexible pipe to a fluid transport line.

7. Flexible pipe (5, 105, 205) according to one of the preceding claims, **characterized in that** it comprises a single debonding interlayer (9) having an elliptical cross section, in such a way that the inner pipe (14) and the outer pipe (15) are entirely separated from each other by the said debonding interlayer, and/or two debonding interlayers (109a, 109b) separated by two diametrically opposed longitudinal linking regions (100a, 100b) where the inner pipe (114) and the outer pipe (115) adhere to each other, each longitudinal region having a cross section whose angular sector lies between 5° and 20°, and/or a single debonding interlayer (209) having a cross section extending over an angle of between 290 and 250°, the inner pipe (214) and the outer pipe (215) adhering to each other over a longitudinal linking region (200) having a cross section extending over an angle of between 110 and 70°.

8. Flexible pipe (5) according to one of the preceding claims, **characterized in that** the outer pipe (14) includes at least one valve (21) placed in the said opening (25) of the outer pipe and designed to be connected to pressurized fluid feed pipe.

9. Process for manufacturing a flexible pipe (5) according to one of Claims 1 to 8, **characterized in that** it comprises, in succession:
- a step of producing an inner pipe (14) made of uncured elastomer;
- a step of placing at least one debonding interlayer (9) over the said inner tube;
- a step of producing an outer pipe (15) made of uncured elastomer over the said debonding interlayer;
- a step of simultaneously curing the inner pipe and the outer pipe; and
- an optional step of cutting the flexible pipe to the desired length,
the said process furthermore including a step of producing at least one opening (25) through the outer pipe at the said interlayer.

10. Process according to Claim 9, **characterized in that** the step of placing the debonding interlayer (9) consists in placing a debonding interlayer in such a way that it extends at least as far as one of the ends of the inner (14) and outer (15) pipes, the step of producing an opening consists in fitting a valve (21) through the outer pipe, the said fitting operation consisting in moving the inner (14) and outer (15) pipes apart by deforming the inner pipe by means of a displacer tool (30) inserted between the inner and outer pipes via their aforementioned ends, in making a hole in the outer pipe displaced from the inner pipe, in inserting a valve into the said hole passing between the two displaced pipes and in fixing the said valve to the outer pipe, the said process including a step of joining the said ends of the outer (15) and inner (14) pipes together in a sealed manner.
